Europäisches Patentamt

European Patent Office

Office européen des brevets

(19)

(11) Veröffentlichungsnummer : **0 084 170**
**B1**

# (12) EUROPÄISCHE PATENTSCHRIFT

(45) Veröffentlichungstag der Patentschrift :
08.07.87

(21) Anmeldenummer : **82112043.3**

(22) Anmeldetag : **28.12.82**

(51) Int. Cl.⁴ : **C 08 L 67/02, F 21 V 7/22**

(54) Verwendung von Polyethylenterephthalat-Formmassen zur Herstellung metallisierter Reflektoren.

(30) Priorität : **15.01.82 US 339599**

(43) Veröffentlichungstag der Anmeldung :
**27.07.83 Patentblatt 83/30**

(45) Bekanntmachung des Hinweises auf die Patenterteilung : **08.07.87 Patentblatt 87/28**

(84) Benannte Vertragsstaaten :
**DE FR GB IT NL**

(56) Entgegenhaltungen :
**EP-A- 0 043 797**
**DE-A- 2 719 429**
**US-A- 3 171 718**
**US-A- 4 125 411**

(73) Patentinhaber : **BAYER AG**
**Konzernverwaltung RP Patentabteilung**
**D-5090 Leverkusen 1 Bayerwerk (DE)**

(72) Erfinder : **Bier, Peter, Dr.**
**Bodelschwinghstrasse 13**
**D-4150 Krefeld 1 (DE)**

EP 0 084 170 B1

**Beschreibung**

Die Erfindung betrifft die Verwendung von Polyethylenterephthalat-Formmassen, die delamierten Kaolin enthalten. Aus diesen Formmassen hergestellte Formkörper besitzen nach vorangegangener Metallisierung ein außerordentlich hohes Reflektionsvermögen.

Polyethylenterephthalat (PET) wird nicht nur für die Faserherstellung, sondern zunehmend auch zur Herstellung von Formkörpern eingesetzt. Es besteht ein Bedürfnis nach Formmassen, die sich zu reflektierenden Gegenständen — wie z. B. Scheinwerferreflektoren — verarbeiten lassen, wobei diese Gegenstände in metallisiertem Zustand ein möglichst hohes Reflektionsvermögen aufweisen sollen.

Es hat sich herausgestellt, daß das Reflektionsvermögen in hohem Grade von der Art der verwendeten Füllstoffe abhängt, obwohl sowohl PET als auch Füllstoff durch die aufgebrachte Metallschicht abgedeckt sind und der Fachmann deshalb erwarten mußte, daß sie keinen unmittelbaren Beitrag zur Reflektion leisten können. Überraschenderweise hat sich gezeigt, daß als PET-Füllstoff delaminierter Kaolin anderen Füllstoffen, wie z. B. Glimmer, Talk und Kreide, überlegen ist.

Kaolin ist als Füllstoff für PET und Polybutylenterephthalat zur Erhöhung der Lichtbogenbeständigkeit und der Kriechstromfestigkeit vorgeschlagen worden (DE-OS-26 16 754 ≙ US-PS-40 52 356 ; veröffentlichte japanische Patentanmeldung 15 191/69). Neben Talkum, Bentonit und Glaskugeln soll auch Kaolin die Flammwidrigkeit von Polyalkylenterephthalaten erhöhen (DE-OS-24 08 531). Keine der genannten Veröffentlichungen betrifft Formmassen, die delaminierten Kaolin enthalten.

Die Verwendung von Polybutylenterephthalat, das als Füllstoff mit einer Teilchengröße von höchstens 30 µm 10-60 Gew.- % Kaolin, Talkum, Glimmer, Wollastonit, Glaskugeln, Zinksulfid, Lithopone, Calciumsulfat oder Bariumsulfat enthält, zur Herstellung lichtreflektierender Körper, wie z. B. Autoscheinwerfer, ist bekannt (EP-A-43 797). Delaminierter Kaolin wird nicht erwähnt.

Die US-PS-3 171 718 betrifft delaminierten Kaolin. Über die Teilchendicke wird gesagt, daß sie rund 1/10 kleiner als der Teilchendurchmesser sei (Sp. 2, Z. 22-24). Angewandt auf den Teilchendurchmesser unseres Anspruchs, würde dies eine Teilchendicke von 0.1 bis 0.2 µm bedeuten. Die von uns gewählte Teilchengröße ist aber kleiner, so daß wir also zweifellos einen anderen Kaolintyp als den der US-PS-3 171 718 verwenden. Die Kombination der US-Patentschrift mit Beispiel 3 der EP-A-43 797 kann daher auch nicht zum Gegenstand unserer Erfindung führen.

Gegenstand der Erfindung ist die Verwendung von Formmassen aus

I. 30-85 Gew.-Teilen Polyethylenterephthalat mit einer Intrinsic-Viskosität von mindestens 0,4 dl/g (gemessen als 0,5 gew.- %ige Lösung in Phenol/o-Dichlorbenzol (Gewichtsverhältnis 60 : 40) bei 25 °C),

II. 2-70 Gew.-Teilen delaminiertem Kaolin, dessen mittlerer Teilchendurchmesser 1 bis 2 µm beträgt, wobei mindestens 90 Gew.- % der Teilchen Durchmesser von 0,5 bis 4,0 µm haben, und dessen mittlere Teilchendicke unter 0,1 µm liegt, wobei mindestens 90 Gew.- % der Teilchen Dicken von 0,02 bis 0,2 µm aufweisen, und

III. 0-70 Gew.-Teilen anderer Füllstoffe und/oder Verstärkungsmittel,

zur Herstellung metallisierter Reflektoren.

Die Polyethylenterephthalate (I) enthalten mindestens 80, vorzugsweise mindestens 90, Mol- %, bezogen auf die Dicarbonsäurekomponente, Terephthalsäurereste und mindestens 80, vorzugsweise mindestens 90, Mol- %, bezogen auf die Diolkomponente, Ethylenglykolreste.

Die Polyethylenterephthalate (I) können neben Terephthalsäureresten bis zu 20 Mol- % Reste anderer aromatischer Dicarbonsäuren mit 8 bis 14 C-Atomen, aliphatischer Dicarbonsäuren mit 4 bis 8 C-Atomen oder cycloaliphatischer Dicarbonsäuren mit 8 bis 12 C-Atomen enthalten, wie z. B. Phthalsäure, Isophthalsäure, Naphthalin-2,6-dicarbonsäure, Diphenyl-4,4-dicarbonsäure, Adipinsäure, Sebacinsäure, Cyclohexandiessigsäure.

Die Polyethylenterephthalate I können neben Ethylenglykolresten bis zu 20 Mol- % anderer aliphatischer Diole mit 3 bis 12 C-Atomen, cycloaliphatischer Diole mit 6 bis 15 C-Atomen und/oder aromatischer Diole mit 6 bis 21 C-Atomen enthalten, z. B. Reste von Propan-1,3-diol, Butan-1,4-diol, Pentan-1,5-diol, Hexan-1,6-diol, Cyclohexan-1,4-dimethanol, 4-Methyl-pentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5,1,4-Di-(ß-hydroxiethoxy)-benzol, 2,2-Bis-(4-hydroxicyclohexyl)-propan, 2,4-Dihydroxi-1,1,3,3-tetramethylcyclobutan, 2,2-Bis-(3-ß-hydroxiethoxyphenyl)-propan- und 2,2-Bis-(4-hydroxipropoxiphenyl)-propan.

Die Polyethylenterephthalte I können durch Einbau relativ kleiner Mengen von 3- oder 4-wertigen Alkoholen oder 3- oder 4-basischen Carbonsäuren, wie sie in der DE-OS-19 00 270 und der US-36 92 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol- % des Verzweigungsmittels, bezogen auf die Säurekomponente, zu verwenden.

Besonders bevorzugt sind Polyethylenterephthalate I, die allein aus Terephthalsäure oder deren reaktionsfähigen Derivaten (z. B. deren Dialkylestern) und Ethylenglykol hergestellt worden sind.

Zur Herstellung von delaminiertem Kaolin sind verschiedene Methoden bekannt, z. B. Extrudieren von Kaolin/Wasser-Mischungen oder Einwirkung von Scherkräften auf einen wäßrigen Brei aus Kaolin und

**0 084 170**

Glasperlen (US-PS 29 04 267, 37 98 044, 41 25 411).

Die mittlere Teilchendicke delaminierter Kaoline liegt vorzugsweise zwischen 0,06 und 0,09 μm.

Bevorzugte Verstärkungsmittel III sind Glasfasern. Zusätzlich können den erfindungsgemäßen Formmassen aber auch Pigmente, Farbstoffe, Stabilisatoren, Nukleiermittel, UV-Absorber, Gleit- und Entformungsmittel zugesetzt werden.

Den erfindungsgemäßen Formmassen können zur besseren Verarbeitung bei niedrigen Formtemperaturen auch die Oligoester der US 42 23 113 zugesetzt werden.

Das Mischen der Komponenten I-III und evtl. weiterer Hilfs- und Zusatzstoffe kann auf übliche Weise, z. B. in Knetern oder Ein- bzw. Zweiwellenextrudern, erfolgen.

Die Spritzgußbedingungen für PET-Formmassen sind bekannt ; vgl. US 35 16 957 und Ervin J. Rubin, Injection Molding Theory and Praxis, Wiley Interscience, 1972.

In den folgenden Beispielen angegebene Teile bedeuten Gewichtsteile ; Prozentangaben beziehen sich auf das Gewicht.

Beispiele

Aus den Formmassen der folgenden Tabelle wurden Scheinwerferreflektoren hergestellt. Diese wurden mit einem Polyurethanlack grundiert, mit Aluminium bedampft, mit 50 Watt-Halogenbirnen versehen. Eine Polycarbonatscheibe wurde mit einem Epoxidharzkleber aufgebracht, und die maximale Lichtausbeute wurde gemessen.

```
PET        65 %            45 %            45 %
Füllstoff  20 % Glimmer    35 % Talk       35 del. Kaolin
Glas       15 %            20 %            20 %

Lichtaus-
beute      40 000 cd       45 000 cd       59 500 cd


PET        55 %            50 %
Füllstoff  10 % Glimmer    25 % del. Kaolin

           15 % del. Kaolin

Glas       15 %            20 %

Lichtaus-
beute      56 000 cd       59 500 cd
```

**Patentanspruch**

Verwendung von Formmassen aus

I. 30-85 Gew.-Teilen Polyethylenterephthalat mit einer Intrinsic-Viskosität von mindestens 0,4 dl/g (gemessen als 0,5 gew.-%ige Lösung in Phenol/o-Dichlorbenzol (Gewichtsverhältnis 60 : 40) bei 25 °C),
II. 2-70 Gew.-Teilen delaminiertem Kaolin, dessen mittlerer Teilchendurchmesser 1 bis 2 μm beträgt, wobei mindestens 90 Gew.-% der Teilchen Durchmesser von 0,5 bis 4,0 μm haben, und dessen mittlere Teilchendicke unter 0,1 μm liegt, wobei mindestens 90 Gew.-% der Teilchen Dicken von 0,02 bis 0,2 μm aufweisen, und
III. 0-70 Gew.-Teilen anderer Füllstoffe und/oder Verstärkungsmittel

zur Herstellung metallisierter Reflektoren.

**Claim**

Use of moulding compositions consisting of

I. 30-85 parts by weight of polyethylene terephthalate with an intrinsic viscosity of at least 0.4 dl/g (measured as a 0.5 % by weight solution in phenol/odichlorobenzene (weight ratio 60 : 40) at 25 °C),
II. 2-70 parts by weight of delaminated kaolin, the average particle diameter of which is 1 to 2 μm, at least 90 % by weight of the particles having diameters of 0.5 to 4.0 μm and the average particle thickness of which is below 0.1 μm, at least 90 % by weight of the particles having thicknesses of 0.02 to 0.2 μm, and
III. 0-70 parts by weight of other fillers and/or reinforcing agents,

for the production of metallised reflectors.

**0 084 170**

**Revendication**

Utilisation de matières moulables constituées de :

I. 30-85 parties en poids de téréphtalate de polyéthylène d'une viscosité intrinsèque d'au moins 0,4 dl/g (mesurée à 25 °C sur une solution à 0,5 % en poids dans un mélange phénol/o-dichlorobenzène, 60 : 40 en poids) ;

II. 2-70 parties en poids de kaolin délaminé, dont le diamètre moyen de particules est de 1 à 2 μm, au moins 90 % en poids des particules ayant des diamètres de 0,5 à 4,0 μm, et dont l'épaisseur moyenne de particules est inférieure à 0,1 μm, au moins 90 % en poids des particules ayant des épaisseurs de 0,02 à 0,2 μm, et

III. 0-70 parties en poids d'autres matières de charge et/ou d'agents de renforcement,

pour la fabrication de réflecteurs métallisés.

4